# EUROPÄISCHE PATENTSCHRIFT

(11) **EP 2 714 103 B1**
(45) Veröffentlichungstag und Bekanntmachung des Hinweises auf die Patenterteilung: **21.08.2019**
(21) Anmeldenummer: 12721528.3
(22) Anmeldetag: 16.05.2012
(51) Int. Cl.: A61L 15/22, A61L 15/60, C08F 2/48, C08L 33/02, C08F 2/18, C08F 220/06

(54) **VERFAHREN ZUR KONTINUIERLICHEN HERSTELLUNG WASSERABSORBIERENDER POLYMERPARTIKEL**
PROCESS FOR THE CONTINUOUS PRODUCTION OF WATER-ABSORBING POLYMER PARTICLES
PROCÉDÉ DE PRODUCTION CONTINUE DE PARTICULES POLYMÈRES HYDROABSORBANTES

(30) Priorität: 26.05.2011 EP 11167598
(43) Veröffentlichungstag der Anmeldung: 09.04.2014
(73) Patentinhaber: BASF SE, 67056 Ludwigshafen am Rhein (DE)
(72) Erfinder: FUNK, Rüdiger, 65527 Niedernhausen (DE); PFEIFFER, Thomas, 67459 Böhl-Iggelheim (DE); POSSEMIERS, Karl J., B-2970 Schilde (BE)
(74) Vertreter: BASF IP Association
(86) Internationale Anmeldenummer: PCT/EP2012/059103
(87) Internationale Veröffentlichungsnummer: WO 2012/159949

(56) Entgegenhaltungen:
- WO-A1-02/066520
- WO-A1-2008/101988
- JP-A- 2003 277 421
- US-A1- 2007 238 842
- US-A1- 2008 004 408

## Beschreibung

Die vorliegende Erfindung betrifft ein Verfahren zur kontinuierlichen Herstellung wasserabsorbierender Polymerpartikel in einem kontinuierlichen Polymerisationsreaktor, wobei die Einsatzmenge an Initiator und/oder die Intensität der zur Initiierung der Polymerisation verwendeten UV-Strahlung nach dem Anfahren des Polymerisationsreaktors gesenkt wird.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm² (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 49.2 g/cm² (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 g/cm² (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

WO 03/051415 A1 beschreibt eine kontinuierliche Herstellung wasserabsorbierender Polymerpartikel in einem Knetreaktor, wobei die eingesetzte Monomerlösung eine Temperatur von mindestens 40°C aufweist.

EP 1 418 000 A2 offenbart eine kontinuierliche Herstellung wasserabsorbierender Polymerpartikel in einem Bandreaktor, wobei ebenfalls eine erwärmte Monomerlösung verwendet wird. Aufgabe der vorliegenden Erfindung war die Bereitstellung eines verbesserten Verfahrens zur Herstellung wasserabsorbierender Polymerpartikel, insbesondere mit einer hohen Zentrifugenretentionskapazität (CRC) und wenig Extrahierbaren.

Gelöst wurde die Aufgabe durch ein Verfahren zur Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
in einem kontinuierlichen Polymerisationsreaktor zu einem Polymergel, die Trocknung des erhaltenen Polymergels, die Zerkleinerung des getrockneten Polymergels zu Polymerpartikeln und die Klassierung der erhaltenen Polymerpartikel, dadurch gekennzeichnet, dass die Einsatzmenge an Initiator c) und/oder die Intensität der optional zur Initiierung der Polymerisation verwendeten UV-Strahlung innerhalb der ersten 120 Minuten nach dem Anfahren des Polymerisationsreaktors um mindestens 10% gesenkt wird.

Die Einsatzmenge an Initiator c) und/oder die Intensität der optional zur Initiierung der Polymerisation verwendeten UV-Strahlung werden vorzugsweise innerhalb der ersten 90 Minuten, besonders bevorzugt innerhalb der ersten 60 Minuten, ganz besonders bevorzugt innerhalb der ersten 30 Minuten, nach dem Anfahren des Polymerisationsreaktor um vorzugsweise mindestens 20%, besonders bevorzugt mindestens 30%, ganz besonders bevorzugt mindestens 40%, gesenkt

Eine Wiederanhebung der Einsatzmenge an Initiator c) und/oder eine Steigerung der Intensität der optional zur Initiierung der Polymerisation verwendeten UV-Strahlung ist während des kontinuierlichen Betriebs des Polymerisationsreaktors üblicherweise nicht erforderlich, außer als Reaktion auf eventuell auftretende Störungen.

Der vorliegenden Erfindung liegt die Erkenntnis zugrunde, dass beim Anfahren eines kontinuierlichen Polymerisationsreaktors zur Herstellung wasserabsorbierender Polymerpartikel eine stärkere Initiierung notwendig ist als beim späteren kontinuierlichen Betrieb. Daher kann einige Zeit nach dem Anfahren des Polymerisationsreaktors die Initiierung zurückgenommen werden. Es ist auch möglich die Initiierung schrittweise zurückzunehmen.

Zur Vereinfachung kann die Initiierung beim Anfahren unabhängig von der im kontinuierlichen Betrieb verwendeten Rezeptur fest auf einen für alle Rezepturen geeigneten hohen Wert eingestellt werden.

Infolge der beim Anfahren höheren Initiierung kann die Polymerisation schneller gestartet werden und es wird schneller ein stationärer Zustand erreicht. Dies ist notwendig, da die Monomerlösung zu Anfang frei von einem Ende zum anderen Ende der Polymerisationszone fließen kann und so ein Teil der Reaktionsmischung nur eine unzureichende Verweilzeit in der Reaktionszone hat.

Bei kurzen Unterbrechungen, bei denen der Polymerisationsreaktor nicht entleert wurde, kann die Anfahrprozedur entsprechend verkürzt werden. Bei längeren Unterbrechungen werden der Polymerisationsreaktor und die Zulaufleitungen entleert. Die Zulaufleitungen der Monomerlösung werden zur Vermeidung von Polymeranbackungen während der Abstellung entleert und gespült. Zur Spülung eignen sich Stickstoff, Luft und/oder entmineralisiertes Wasser.

Die mittlere Verweilzeit im Polymerisationsreaktor beträgt vorzugsweise von 5 bis 120 Minuten, besonders bevorzugt von 10 bis 90 Minuten, ganz besonders bevorzugt von 15 bis 60 Minuten.

Beim Anfahren wird der Polymerisationsreaktor vorzugsweise mit 40 bis 80%, besonders bevorzugt 50 bis 75%, ganz besonders bevorzugt 60 bis 70%, der Nennlast betrieben, wobei die Nennlast der mengenmäßige Zulauf an Monomerlösung beim stationären Betrieb ist.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Die im erfindungsgemäßen Verfahren bevorzugt einsetzbaren Knetreaktoren weisen mindestens zwei achsparallel rotierende Wellen auf, wobei sich auf den Wellen üblicherweise mehrere Knet- und Transportelemente befinden.

Der Polymerisationsreaktor wird vor dem Anfahren auf eine Temperatur von 30 bis 120°C, besonders bevorzugt 60 bis 100°C, ganz besonders bevorzugt 80 bis 90°C, vorgewärmt.

Im Falle eines Knetreaktors erfolgt die Vorwärmung vorzugsweise mittels eines begleitbeheizten Doppelmantels. Als Wärmeträger sind Warmwasser und Heizdampf geeignet. Hierbei ist Heizdampf bevorzugt, da die Temperatur des Heizdampfes sehr einfach über den Druck eingestellt werden kann. Dies kann beispielsweise durch Entspannung von höher gespanntem Wasserdampf mit anschließender Sättigung des so erzeugten überhitzten Wasserdampfes erfolgen.

Der Heizdampf weist einen Druck von vorzugsweise 1,4 bis 16 bar, besonders bevorzugt von 1,8 bis 11 bar, ganz besonders bevorzugt von 2 bis 4 bar, auf.

Geeignete Knetreaktoren sind beispielsweise von der List AG (Arisdorf; Schweiz) erhältlich und in der CH 664 704 A5, EP 0 517 068 A1, WO 97/12666 A1, DE 21 23 956 A1, EP 0 603 525 A1, DE 195 36 944 A1 und DE 41 18 884 A1 beschrieben.

Solche Knetreaktoren mit mindestens zwei Wellen erzielen durch die Anordnung der Knet- und Transportelemente eine hohe Selbstreinigung, die für eine kontinuierliche Polymerisation eine wichtige Anforderung ist. Vorzugsweise rotieren die beiden Wellen gegenläufig zueinander.

Auf der Rührwelle sind die Scheibensegmente propellerartig angeordnet. Als Knet- und Transportelemente sind beispielsweise wandgängige Mischbarren sowie L- oder U-förmig ausgeformte Aufsätze geeignet.

Im Folgenden wird die Herstellung der wasserabsorbierenden Polymerpartikel näher erläutert:
Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale,
0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxyliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; Deutschland) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Zur Verbesserung der Trocknungseigenschaften kann das mittels eines Knetreaktors erhaltene zerkleinerte Polymergel zusätzlich extrudiert werden.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von größer 150 µm beträgt vorzugsweise mindestens 90 Gew.-%, besonders bevorzugt mindestens 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Dies geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindestens 95 Gew.-%, ganz besonders bevorzugt mindestens 98 Gew.-%.

Der Anteil an Partikeln mit einer Partikelgröße von höchstens 600 µm, beträgt vorzugsweise mindestens 90 Gew.-%, besonders bevorzugt mindestens 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Hydroxid, Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat, Citrat und Lactat, möglich. Es sind auch Salze mit unterschiedlichen Gegenionen möglich, beispielsweise basische Aluminiumsalze, wie Aluminiummonoacetat oder Aluminiummonolaktat. Aluminiumsulfat, Aluminiummonoacetat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; Deutschland), Vrieco-Nauta Continuous Mixer (Hosokawa Micron BV; Doetinchem; Niederlande), Processall Mixmill Mixer (Processall Incorporated; Cincinnati; USA) und Schugi Flexomix® (Hosokawa Micron BV; Doetinchem; Niederlande). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; Deutschland), Hosokawa Bepex® Disc Dryer (Hosokawa Micron GmbH; Leingarten; Deutschland), Holo-Flite® dryers (Metso Minerals Industries Inc.; Danville; USA) und Nara Paddle Dryer (NARA Machinery Europe; Frechen; Deutschland). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

In einer bevorzugten Ausführungsform der vorliegenden Erfindung werden die wasserabsorbierenden Polymerpartikel nach der thermischen Trocknung gekühlt. Die Kühlung wird vorzugsweise in Kontaktkühlern, besonders bevorzugt Schaufelkühlern, ganz besonders bevorzugt Scheibenkühlern, durchgeführt. Geeignete Kühler sind beispielsweise Hosokawa Bepex® Horizontal Paddle Cooler (Hosokawa Micron GmbH; Leingarten; Deutschland), Hosokawa Bepex® Disc Cooler (Hosokawa Micron GmbH; Leingarten; Deutschland), Holo-Flite® coolers (Metso Minerals Industries Inc.; Danville; USA) und Nara Paddle Cooler (NARA Machinery Europe; Frechen; Deutschland). Überdies können auch Wirbelschichtkühler eingesetzt werden.

Im Kühler werden die wasserabsorbierenden Polymerpartikel auf 20 bis 150°C, vorzugsweise 30 bis 120°C, besonders bevorzugt 40 bis 100°C, ganz besonders bevorzugt 50 bis 80°C, abgekühlt.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert. Vorteilhaft wird die Nachbefeuchtung im Kühler nach der thermischen Trocknung durchgeführt. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA empfohlenen Testmethode Nr. WSP 230.2-05 "Mass Loss Upon Heating" bestimmt wird.

Die gemäß dem erfindungsgemäßen Verfahren hergestellten wasserabsorbierenden Polymerpartikel haben einen Anteil an Partikeln mit einer Partikelgröße von 300 bis 600 µm von vorzugsweise mindestens 30 Gew.-%, besonders bevorzugt mindestens 50 Gew.-%, ganz besonders bevorzugt mindestens 70 Gew.-%.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Fluid Retention Capacity in Saline, After Centrifugation" bestimmt.

Die gemäß dem erfindungsgemäßen Verfahren hergestellten wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der wasserabsorbierenden Polymerpartikel beträgt üblicherweise weniger als 35 g/g. Die Absorption unter einem Druck von 49,2 g/cm² wird analog der von der EDANA empfohlenen Testmethode Nr. WSP 242.2-05 "Absorption Under Pressure, Gravimetric Determination" bestimmt, wobei statt eines Drucks von 21,0 g/cm² ein Druck von 49,2 g/cm² eingestellt wird.

### Methoden:

Die nachfolgend beschriebenen, mit "WSP" bezeichneten Standard-Testmethoden werden beschrieben in: "Standard Test Methods for the Nonwovens Industry", Ausgabe 2005, gemeinsam herausgegeben von den "Worldwide Strategic Partners" EDANA (Avenue Eugene Plasky, 157, 1030 Brüssel, Belgien, www.edana.org) und INDA (1100 Crescent Green, Suite 115, Cary, North Carolina 27518, USA, www.inda.org). Diese Veröffentlichung ist sowohl von EDANA als auch von INDA erhältlich.

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

### Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Fluid Retention Capacity in Saline, After Centrifugation" bestimmt.

### Extrahierbare

Der Gehalt an extrahierbaren Bestandteilen der wasserabsorbierenden Polymerpartikel wird gemäß der von der EDANA empfohlenen Testmethode Nr. WSP 270.2-05 "Extractable" bestimmt.

### Beispiele

### Beispiel 1

Eine auf ca. 15°C gekühlte Lösung aus 75,7 g Acrylsäure, 681,7 g wässrige Natriumacrylatlösung (37,3gew.-%ig), 235,3 g deionisiertes Wasser und 1,35 g 3-fach ethoxyliertes Glycerintriacrylat (ca. 85 gew.-%ig) wurde für 30 Minuten durch Einleiten von Stickstoff vom Luftsauerstoff befreit. Die Polymerisation wurde in einem 2 Liter Kunststoffgefäß durch Zugabe von 3,0 g wässrige Natriumperoxodisulfatlösung (25,2gew.-%), 4,0 g wässrige Ascorbinsäurelösung (0,40gew.-%) und 5,0 g wässrige Wasserstoffperoxidlösung (0,08gew.-%) gestartet. Das erhaltene Gel wurde mit einem Fleischwolf zerkleinert und dann für 60 Minuten bei 150°C in einem Umlufttrockenschrank getrocknet, mit einem Walzenstuhl gemahlen und durch Siebung auf einen Partikelgrößenbereich von 150 µm bis 850 µm eingestellt.

Die erhaltenen Polymerpartikel wurden analysiert. Die Ergebnisse sind in der Tabelle 1 zusammengefasst.

### Beispiel 2

Es wurde verfahren wie unter Beispiel 1. Die Menge an Natriumperoxodisulfat, Ascorbinsäure und Wasserstoffperoxid wurde jeweils auf die Hälfte gesenkt. Die erhaltenen Polymerpartikel wurden analysiert. Die Ergebnisse sind in der Tabelle 1 zusammengefasst.

**Tab. 1: Beispiele 1 und 2**

| | CRC [g/g] | Extrahierbare [Gew.-%] |
|---|---|---|
| Bsp. 1 | 35,2 | 10,3 |
| Bsp. 2 (1/2 Initiatormenge) | 36,5 | 8,6 |

### Beispiel 3

Eine auf ca. 15°C gekühlte Lösung aus 105,1 g Acrylsäure, 683,3 g wässrige Natriumacrylatlösung (37,3gew.-%ig), 204,1 g deionisiertes Wasser und 1,50 g 3-fach ethoxyliertes Glycerintriacrylat (ca. 85gew.-%ig) wurde für 30 Minuten durch Einleiten von Stickstoff vom Luftsauerstoff befreit. Die Polymerisation wurde in einem 2 Liter Kunststoffgefäß durch Zugabe von 3,0 g wässrige Natriumpersulfatlösung (28,0gew.-%), 2,0 g wässrige Ascorbinsäurelösung (0,46gew.-%) und 5,0 g wässrige Wasserstoffperoxidlösung (0,1gew.-%) gestartet. Die Reaktionsmischung erreichte nach 12 Minuten eine Temperatur von 100°C. Das erhaltene Gel wurde mit einem Fleischwolf zerkleinert und dann für 60 Minuten bei 150°C in einem Umlufttrockenschrank getrocknet, mit einem Walzenstuhl gemahlen und durch Siebung auf einen Partikelgrößenbereich von 150 µm bis 850 µm eingestellt.

Die erhaltenen Polymerpartikel wurden analysiert. Die Ergebnisse sind in der Tabelle 2 zusammengefasst.

### Beispiel 4

Es wurde verfahren wie unter Beispiel 3. Die Menge an Natriumperoxodisulfat, Ascorbinsäure und Wasserstoffperoxid wurde jeweils auf die Hälfte gesenkt. Die Reaktionsmischung erreichte nach 18 Minuten eine Temperatur von 100°C. Die erhaltenen Polymerpartikel wurden analysiert. Die Ergebnisse sind in der Tabelle 2 zusammengefasst.

**Tab. 2: Beispiele 3 und 4**

| | CRC [g/g] | Extrahierbare [Gew.-%] |
|---|---|---|
| Bsp. 3 | 31,1 | 12,2 |
| Bsp. 4 (1/2 Initiatormenge) | 32,3 | 11,2 |

### Beispiel 5

Eine auf ca. 15°C gekühlte Lösung aus 39,0 g Acrylsäure, 349,1 g wässrige Natriumacrylatlösung (37,3gew.-%ig), 105,2 g deionisiertes Wasser und 0,70 g 3-fach ethoxyliertes Glycerintriacrylat (ca. 85gew.-%ig) wurde für 30 Minuten durch Einleiten von Stickstoff vom Luftsauerstoff befreit. Die Polymerisation wurde in einem 1 Liter Glasgefäß durch Zugabe von 3,0 g wässrige Natriumpersulfatlösung (20,0gew.-%), 1,5 g wässrige Ascorbinsäurelösung (0,84gew.-%ig) und 1,5 g wässrige Wasserstoffperoxidlösung (0,74gew.-%) gestartet. Das erhaltene Gel wurde mit einem Fleischwolf zerkleinert und dann für 60 Minuten bei 150°C in einem Umlufttrockenschrank getrocknet, mit einem Walzenstuhl gemahlen und durch Siebung auf einen Partikelgrößenbereich von 150 µm bis 850 µm eingestellt.

Die erhaltenen Polymerpartikel wurden analysiert. Die Ergebnisse sind in der Tabelle 3 zusammengefasst.

### Beispiel 6

Beispiel 5 wurde wiederholt. Die Ergebnisse sind in der Tabelle 3 zusammengefasst.

### Beispiel 7

Es wurde verfahren wie unter Beispiel 5. Die Menge an Natriumperoxodisulfat, Ascorbinsäure und Wasserstoffperoxid wurde jeweils auf zwei Drittel gesenkt. Die erhaltenen Polymerpartikel wurden analysiert. Die Ergebnisse sind in der Tabelle 3 zusammengefasst.

### Beispiel 8

Beispiel 7 wurde wiederholt. Die Ergebnisse sind in der Tabelle 3 zusammengefasst.

### Beispiel 9

Es wurde verfahren wie unter Beispiel 5. Die Menge an Natriumperoxodisulfat, Ascorbinsäure und Wasserstoffperoxid wurde jeweils auf ein Drittel gesenkt. Die erhaltenen Polymerpartikel wurden analysiert. Die Ergebnisse sind in der Tabelle 3 zusammengefasst.

### Beispiel 10

Beispiel 9 wurde wiederholt. Das erhaltene Produkt konnte nicht gemahlen werden.

**Tab. 3: Beispiele 5 bis 10**

| | CRC [g/g] | Extrahierbare [Gew.-%] |
|---|---|---|
| Bsp. 5 | 32,5 | 16,9 |
| Bsp. 6 | 32,8 | 18,5 |
| Bsp. 7 (2/3 Initiatormenge) | 34,1 | 13,7 |
| Bsp. 8 (2/3 Initiatormenge) | 34,4 | 15,1 |
| Bsp. 9 (1/3 Initiatormenge) | 50,9 | 55,8 |
| Bsp. 10 (1/3 Initiatormenge) | - | - |

Die Ergebnisse zeigen den Einfluss der Initiierung auf die Produktqualität. Die Senkung der beim Anfahren notwendigen Initiierung im kontinuierlichen Betrieb führt also zu einer deutlichen Verbesserung.

## Patentansprüche

1. Verfahren zur kontinuierlichen Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
in einem kontinuierlichen Polymerisationsreaktor zu einem Polymergel, die Trocknung des erhaltenen Polymergels, die Zerkleinerung des getrockneten Polymergels zu Polymerpartikeln und die Klassierung der erhaltenen Polymerpartikel, **dadurch gekennzeichnet, dass** die Einsatzmenge an Initiator c) und/oder die Intensität der optional zur Initiierung der Polymerisation verwendeten UV-Strahlung innerhalb der ersten 120 Minuten nach dem Anfahren des Polymerisationsreaktors um mindestens 10% gesenkt wird.

2. Verfahren gemäß Anspruch 1, **dadurch gekennzeichnet, dass** die Einsatzmenge an Initiator c) innerhalb der ersten 30 Minuten nach dem Anfahren des Polymerisationsreaktors um mindestens 40% gesenkt wird.

3. Verfahren gemäß Anspruch 1 oder 2, **dadurch gekennzeichnet, dass** der Polymerisationsreaktor vor dem Anfahren der Polymerisation auf mindestens 50°C vorgeheizt wird.

4. Verfahren gemäß einem der Ansprüche 1 bis 3, **dadurch gekennzeichnet, dass** die mittlere Verweilzeit im Polymerisationsreaktor von 5 bis 120 Minuten beträgt.

5. Verfahren gemäß einem der Ansprüche 1 bis 4, **dadurch gekennzeichnet, dass** der Polymerisationsreaktor ein Knetreaktor ist.

6. Verfahren gemäß einem der Ansprüche 1 bis 4, **dadurch gekennzeichnet, dass** der Polymerisationsreaktor ein Bandreaktor ist.

7. Verfahren gemäß einem der Ansprüche 1 bis 6, **dadurch gekennzeichnet, dass** die wasserabsorbierenden Polymrpartikel oberflächennachvernetzt, optional beschichtet und optional klassiert werden.

8. Verfahren gemäß einem der Ansprüche 1 bis 7, **dadurch gekennzeichnet, dass** das Monomer a) zu mindestens 50 mol-% teilweise neutralisierte Acrylsäure ist.

9. Verfahren gemäß einem der Ansprüche 1 bis 8, **dadurch gekennzeichnet, dass** das Monomer a) zu 25 bis 85 mol-% neutralisiert ist.

10. Verfahren gemäß einem der Ansprüche 1 bis 9, **dadurch gekennzeichnet, dass** die wasserabsorbierenden Polymerpartikel eine Zentrifugenretentionskapazität von mindestens 15 g/g aufweisen.

## Claims

1. A process for continuously producing water-absorbing polymer particles by polymerizing a monomer solution or suspension comprising
a) at least one ethylenically unsaturated monomer which bears acid groups and may be at least partly neutralized,
b) at least one crosslinker,
c) at least one initiator,
d) optionally one or more ethylenically unsaturated monomers copolymerizable with the monomers specified under a) and
e) optionally one or more water-soluble polymers,
in a continuous polymerization reactor to give a polymer gel, drying the resulting polymer gel, comminuting the dry polymer gel to give polymer particles and classifying the resulting polymer particles, wherein the amount of initiator c) used and/or the intensity of the UV radiation optionally used to initiate the polymerization are lowered by at least 10% within the first 120 minutes after the startup of the polymerization reactor.

2. The process according to claim 1, wherein the amount of initiator c) used is lowered by at least 40% within the first 30 minutes after the startup of the polymerization reactor.

3. The process according to claim 1 or 2, wherein the polymerization reactor is preheated to at least 50°C before the startup of the polymerization.

4. The process according to at least one of claims 1 to 3, wherein the mean residence time in the polymerization reactor is from 5 to 120 minutes.

5. The process according to any of claims 1 to 4, wherein the polymerization reactor is a kneading reactor.

6. The process according to any of claims 1 to 4, wherein the polymerization reactor is a belt reactor.

7. The process according to any of claims 1 to 6, wherein the water-absorbing polymer particles are surface postcrosslinked, optionally coated and optionally classified.

8. The process according to any one of claims 1 to 7, wherein monomer a) is acrylic acid partly neutralized to an extent of at least 50 mol%.

9. The process according to any one of claims 1 to 8, wherein monomer a) has been neutralized to an extent of 25 to 85 mol%.

10. The process according to any one of claims 1 to 9, wherein the water-absorbing polymer particles have a centrifuge retention capacity of at least 15 g/g.

## Revendications

1. Procédé de fabrication continue de particules polymères absorbant l'eau par polymérisation d'une solution ou suspension de monomères, contenant :
a) au moins un monomère éthyléniquement insaturé, portant des groupes acides, qui peut être au moins partiellement neutralisé,
b) au moins un agent de réticulation,
c) au moins un initiateur,
d) éventuellement un ou plusieurs monomères éthyléniquement insaturés copolymérisables avec les monomères indiqués en a), et
e) éventuellement un ou plusieurs polymères solubles dans l'eau,
dans un réacteur de polymérisation continu pour former un gel polymère, le séchage du gel polymère obtenu, le broyage du gel polymère séché en particules polymères, et la classification des particules polymères obtenues, **caractérisé en ce que** la quantité utilisée d'initiateur c) et/ou l'intensité du rayonnement UV éventuellement utilisé pour l'initiation de la polymérisation sont diminuées d'au moins 10 % pendant les premières 120 minutes après le démarrage du réacteur de polymérisation.

2. Procédé selon la revendication 1, **caractérisé en ce que** la quantité utilisée d'initiateur c) est diminuée d'au moins 40 % pendant les premières 30 minutes après le démarrage du réacteur de polymérisation.

3. Procédé selon la revendication 1 ou 2, **caractérisé en ce que** le réacteur de polymérisation est préchauffé à au moins 50 °C avant le démarrage de la polymérisation.

4. Procédé selon l'une quelconque des revendications 1 à 3, **caractérisé en ce que** le temps de séjour moyen dans le réacteur de polymérisation est de 5 à 120 minutes.

5. Procédé selon l'une quelconque des revendications 1 à 4, **caractérisé en ce que** le réacteur de polymérisation est un réacteur à malaxage.

6. Procédé selon l'une quelconque des revendications 1 à 4, **caractérisé en ce que** le réacteur de polymérisation est un réacteur à bande.

7. Procédé selon l'une quelconque des revendications 1 à 6, **caractérisé en ce que** les particules polymères absorbant l'eau sont post-réticulées en surface, éventuellement revêtues et éventuellement classifiées.

8. Procédé selon l'une quelconque des revendications 1 à 7, **caractérisé en ce que** le monomère a) est à hauteur d'au moins 50 % en moles de l'acide acrylique partiellement neutralisé.

9. Procédé selon l'une quelconque des revendications 1 à 8, **caractérisé en ce que** le monomère a) est neutralisé à hauteur de 25 à 85 % en moles.

10. Procédé selon l'une quelconque des revendications 1 à 9, **caractérisé en ce que** les particules polymères absorbant l'eau présentent une capacité de rétention centrifuge d'au moins 15 g/g.
